# EUROPÄISCHE PATENTSCHRIFT

(11) **EP 1 443 096 B1**
(45) Veröffentlichungstag und Bekanntmachung des Hinweises auf die Patenterteilung: **20.04.2011**
(21) Anmeldenummer: 03001796.6
(22) Anmeldetag: 28.01.2003
(51) Int. Cl.: C10L 5/44, C10L 5/08, C10L 5/04

(54) **Verfahren und Vorrichtung zur Herstellung von Brennstoffen aus gepresster Biomasse und Verwendung derselben**
Process and apparatus for the production of fuels from compressed biomass and use of these fuels
Procédé et appareil pour la production de combuslibles à partir de biomasse compactée et leur usage

(43) Veröffentlichungstag der Anmeldung: 04.08.2004
(60) Teilanmeldung: 10182167.6
(73) Patentinhaber: Werner, Hans, 81825 München (DE)
(72) Erfinder: Werner, Hans, 81825 München (DE)
(74) Vertreter: Leske, Thomas

(56) Entgegenhaltungen:
- EP-A- 0 985 723
- CH-A- 248 748
- DE-A- 10 153 975
- US-A- 4 324 561
- US-A- 4 363 636
- US-A- 5 352 252

## Beschreibung

### Gebiet der Erfindung

Die vorliegende Erfindung betrifft Verfahren und Vorrichtungen zur Herstellung von Brennstoffen aus Biomasse sowie deren Verwendung und insbesondere Brennstoffe, aus zu Granulat, Presslingen, Pellets oder Briketts gepresster Biomasse.

### Hintergrund der Erfindung

Neben fossilen Brennstoffen finden Energieträger in Form von Biomasse in zunehmendem Maße Verwendung. Unter Biomasse werden insbesondere Pflanzen, Pflanzenbestandteile, Biomasse und Nebenprodukte pflanzlicher und tierischer Herkunft und Holz verstanden.

Herkömmlicherweise wird bei Energiegewinnung mittels Biomasse, diese einfach verbrannt. Diese Vorgehensweise hat mehrere Nachteile. Abhängig von der Art zu verbrennender Biomasse können sich Transport, Bevorratung und Handhabung beim Verbrennen insbesondere in Privathaushalten im Vergleich mit fossilen Brennstoffen deutlich komplexer gestalten. Als anschauliches Beispiel sei hier die Verwendung von Stroh als Brennstoff genannt. Des Weiteren können bei dieser Vorgehensweise gesetzliche Regelungen, die Schadstoffemissionen und Wirkungsgrade beim Verbrennen von Biomasse betreffen, bei Verwendung nicht verarbeiteter Biomasse verletzt werden.

Aufgrund seines hohen Energiegehalts stellt Holz eine bevorzugte Biomasse dar. Um auch Holz in Form von Holzabfällen, Späne und dergleichen nutzen zu können, ist es bekannt, sogenannte Holzpellets herzustellen und zur Energieerzeugung zu verwenden. Holzpellets bestehen aus gepressten Holzpartikeln. Diese können, vergleichbar zu Kohle- oder Holzkohlebriketts, einfach transportiert, gelagert und beim Verbrennen gehandhabt werden.

In US4324561 sind ein Verfahren und eine Vorrichtung zum Pelletieren botanischen Materials zur Verwendung als Brennstoff beschrieben, bei welchem bzw. mit welcher das botanische Material zuerst thermisch getrocknet, dann zerkleinert und nach erneutem Erwärmen formgepresst wird.

In US4363636 ist ein Verfahren zur Behandlung von Bagasse aus der Zuckerherstellung beschrieben, welche durch thermisches Trocknen, einem Zerkleinern und anschließende Formpressen zu einem Brennstoff verarbeitet wird.

In US5352252 ist ein Verfahren zur Herstellung von Brennstoff aus Stroh verschiedener Getreidesorten und ggf. Zuckerrohr beschrieben, bei welchem das Stroh zunächst thermisch getrocknet, anschließend zerkleinert und nach Zugabe von Bindemitteln formgepresst wird.

Angesichts der vielen verschiedenen Arten von Biomasse und der zunehmenden Forderung nach alternativen Energieträgern, ist es wünschenswert, neben Holz auch aus anderen Biomassen einfach zu transportierende, zu lagernde und beim Verbrennen zu handhabende Brennstoffe bereitzustellen.

### Aufgabe der Erfindung

Aufgabe der vorliegenden Erfindung ist es, zusätzlich zu Biomasse in Form von Holz bisher nicht genutzte Biomasse zur Herstellung von Brennstoffen zu verwenden und dabei Brennstoffe bereitzustellen, die hinsichtlich ihres Transports, ihrer Lagerung und ihrer Handhabung beim Verbrennen mit Holzpellets vergleichbar sind.

### Kurzbeschreibung der Erfindung

Zur Lösung der oben genannten Aufgabe stellt die vorliegende Erfindung ein Verfahren zur Herstellung von Brennstoffen aus Biomasse gemäß Anspruch 1, eine Verwendung so hergestellter Brennstoffe gemäß Anspruch 10, 14 und 15 eine Vorrichtung zur Herstellung solcher Brennstoffe gemäß Anspruch 11 bereit.

Unter Biomasse werden hier im Folgenden insbesondere Garten- und Landschaftsbauabfälle, wie zum Beispiel Pflanzenschnittgut, Blätter, Laub, Gras, Astwerk und dergleichen, Garten- und Landschaftsbauprodukte, die gezielt zur Verwendung als Brennstoff angebaut werden, tierische Abfallprodukte, wie zum Beispiel Pferdemist und Kuhdung, und Meerespflanzen, wie zum Beispiel Algen, verstanden.

Bei dem erfindungsgemäßen Verfahren ist es vorgesehen, Biomasse, mittels eines technischen Verfahrens zu trocknen, bevor die getrocknete Biomasse Brennstoffe in gepresster Form hergestellt werden.

Die Formulierungen "in gepresster Form", "Formpressen" und ähnliche in diesem Zusammenhang verwendete Bezeichnungen werden im Folgenden verwendet, um anzugeben, dass die getrocknete Biomasse gepresst, verpresst, verdichtet und dergleichen wird. Auf diese Weise können Brennstoffe in einstückiger, handhabbarer Form erzeugt werden. Beispiele für so hergestellte Brennstoffe sind aus getrockneter und gepresster Biomasse hergestellte Brennstoffe in Form von Granulat, Presslingen, Pellets, Briketts, und Pressformen größerer Abmessung. Die Form erfindungsgemäßer Brennstoffe hängt beispielsweise davon ab, auf welche Weise bzw. mit welchen Vorrichtungen diese verbrannt werden sollen. So bieten sich für eine Verwendung zum Heizen in Privathaushalten erfindungsgemäße Brennstoffe in Form von Presslingen, Pellets oder Briketts an. Bei Verwendung erfindungsgemäßer Brennstoffe in größeren Energieerzeugungsanlagen, wie zum Beispiel einem Biomassekraftwerk, können Pressformen größeren Volumens verwendet werden. Die Verwendung erfindungsgemäßer Brennstoffe in Form von Granulat erlaubt die Verbrennung derselben beispielsweise in Taschenwärmern.

Die Vorgehensweise, Biomasse vor Herstellung geformter Brennstoffe zu trocknen, erlaubt es, beliebige Biomasse unabhängig von ihrem Feuchtegehalt zu verwenden. Bei der bekannten Herstellung von Holzpellets war es bisher erforderlich, Holz mit einem Feuchtegehalt unter vorgegebenen oder gewünschten Grenzwerten zu verwenden. Holz mit zu hohem Feuchtegehalt blieb dabei ebenso unberücksichtigt, wie andere Biomasse, insbesondere in Form von Garten- und Landschaftsbauprodukten und - abfällen. Dies gilt auch für Biomasse in Form von geschnittenem Gras, Getreide und dergleichen, die bisher zur Energieerzeugung nur nach langwieriger, natürlicher Trocknung im Freien als Biomassebrennstoff verwendet wurden, wobei, als weiterer Unterschied zu dem erfindungsgemäßen Verfahren derartige als Brennstoff verwendete Biomasse nicht gepresst oder verdichtet wurde, um z.B. Pellets zu erzeugen.

Um den Trocknungsprozess zu vereinfachen und/oder um Brennstoffe in beliebiger Form herzustellen, ist es bevorzugt, dass die Biomasse vor dem Trocknen zerkleinert wird. Dies kann beispielsweise durch Häckseln, Schreddern und dergleichen erfolgen.

Biomasse mit hohem Feuchtegehalt ist vor dem Trocknen zu pressen, um dadurch den durch das Trocknen zu entfernenden Feuchtegehalt zu reduzieren. Um den Pressvorgang zu erleichtern und/oder zu verbessern, wird die Biomasse zuvor zerkleinert. Aufgrund des Pressvorgangs kann die durch diesen vorgetrocknete Biomasse eine Beschaffenheit aufweisen, die den eigentlichen Trocknungsvorgang erschwert; so kann die Biomasse nach diesem Pressen beispielsweise verdichtet oder verklumpt sein. In solchen Fällen ist vorgesehen, dass die Biomasse nach diesem Pressvorgang erneut zerkleinert oder auf andere geeignete Weise bearbeitet wird, um eine hinsichtlich des Trocknens unerwünschte Beschaffenheit aufgrund des Pressvorgangs zu beseitigen.

Zum Trocknen der Biomasse können erwärmte Gase, beispielweise in Form von Heißluft, erwärmten technischen Gasen und Kombinationen derselben, verwendet werden. Insbesondere ist es bevorzugt, zum Trocknen der Biomasse bei anderen Verfahren oder Vorrichtungen entstehende Abwärme zu nutzen, die beispielsweise bei Heizkraftwerken oder in Räumen oder Gebäuden in Privathaushalten oder im industriellen Bereich entsteht. Hierbei können z.B. Wärmepumpen verwendet werden, um Abwärme dem Trocknungsvorgang zuzuführen. Wie unten ausgeführt, ist es auch möglich, zum Trocknen benötigte Energie, wenigstens teilweise, durch Verbrennen erfindungsgemäß hergestellter Brennstoffe zu erzeugen. Alternativ oder ergänzend ist es vorgesehen, zum Trocknen eine Mikrowellenheizung zu verwenden.

Die beim Trocknen verwendeten Temperaturen der Umgebung der Biomasse bzw. die beim Trocknen in der Biomasse erzeugten Temperaturen hängen von der Art der Biomasse, der gewünschten oder vorgegebenen Trocknungsdauer, einem gewünschten oder, beispielweise gesetzlich, vorgegebenen Wirkungsgrad beim Trocknen ab.

Der Trocknungsvorgang kann auch so durchgeführt werden, dass in der zu verarbeitenden Biomasse vor dem Trocknen enthaltene Stoffe erhalten und/oder abgebaut bzw. entfernt werden. So können beispielsweise Geruchsbelastungen, gesundheitsschädliche oder gesundheitsbedenkliche Emissionen, Rauchentwicklung und dergleichen beim Verbrennen erfindungsgemäß hergestellter Brennstoffe vermieden werden.

Um beim Verbrennen erfindungsgemäß hergestellten Brennstoffs erzeugte Emission zu verringern, falls solche überhaupt erzeugt werden, ist es möglich, Emissionen beim Trocknen der Biomasse zu entfernen. So ist es beispielsweise vorgesehen, beim Trocknen der Biomasse entstehende Gase oder anfallende Flüssigkeiten, beispielsweise in Form von Flüssigkeitspartikeln, abzusaugen und beispielsweise durch geeignet Abgas- bzw. Filtervorrichtungen zu führen und gegebenenfalls als Sondermüll zu entsorgen. Derartige Verfahrensschritte können auch beim Zerkleinern und/oder Pressen der Biomasse durchgeführt werden.

Gemäß einer bevorzugten Ausführungsform wird die Biomasse beim Trocknen unter Druck gesetzt und, beispielweise nach einer vorgegebenen oder gewünschten Trocknungsdauer, noch im erwärmten Zustand Umgebungsdruck ausgesetzt. Die dabei auftretende Druckänderung bewirkt, dass zusätzlich Feuchtigkeit aus der Biomasse austritt.

Aufgrund der Trocknung der Biomasse vor dem Formpressen ist es möglich, dass unterschiedliche Arten von Biomasse in vermengter Form verwendet werden, ohne dass dabei auf den Feuchtegehalt einzelner Arten zu achten ist. Werden unterschiedliche Arten von Biomasse in vermengter Form verwendet, ist wenigstens der Trocknungsvorgang und auch der bzw. die Zerkleinerungsvorgänge und der Pressvorgang entsprechend auszulegen. Dies kann zwar die einzelnen Verfahrensschritte verlängern und komplexer gestalten, erlaubt es aber, beliebige Biomasse ohne vorherige Trennung in einzelne Arten zu verwenden.

Wenn Biomasse in getrennter Form vorliegt, beispielsweise nach Gras, Holz, Pflanzen und dergleichen getrennt, können die einzelnen Verfahrensschritte für jede Art von Biomasse getrennt durchgeführt werden. Dies erlaubt es die einzelnen Verfahrensschritte auf die jeweilige Art Biomasse optimal abzustimmen und Brennstoff herzustellen, der nur auf einer Art Biomasse basiert.

Wenn für unterschiedliche Arten von Biomasse die einzelnen Verfahrensschritte abgesehen von dem Formpressen durchgeführt sind, können die unterschiedlichen Arten Biomasse vermengt und gemeinsam in Form verpresst werden. Auf diese Weise können Brennstoffe hergestellt werden, die auf unterschiedlichen Arten Biomasse basieren und Biomasse in unterschiedlicher Zusammensetzungen und/oder unterschiedlichen Anteilen enthalten. Eine solche Kombination unterschiedlicher Arten Biomasse erlaubt es, neben Biomasse hohen Heizwerts zu Herstellung eines Brennstoffs auch Biomasse niedrigen Heizwerts zu verwenden, die ansonsten aufgrund ihres niedrigen Heizwerts nicht als alleinige Basis für einen Brennstoff gewählt würde. Auch können unterschiedliche Arten Biomasse zur Herstellung eines Brennstoffs so kombiniert werden, das sich beim Verbrennen Emissionen der unterschiedlichen Biomassearten kompensieren oder so miteinander reagieren, dass unerwünschte Emissionen, die bei getrennter Verbrennung der unterschiedlichen Arten Biomasse entstehen, vermieden werden.

Eine bevorzugte Biomasse zum Herstellen erfindungsgemäßer Brennstoffe ist Gras, das auch z.B. mit Holz umfassender Biomasse kombiniert werden kann. So ist es vorgesehen, mittels des erfindungsgemäßen Verfahrens Graspellets und Gras-Holz-Pellets bzw. in andere Formen gepresstes Gras und Gras-Holz-Gemenge zu erzeugen.

Neben der Verwendung herkömmlicher Energiearten zur Durchführung des erfindungsgemäßen Verfahrens, wie z.B. mittels fossiler Brennstoffe erzeugte Energie, Windenergie und Sonnenenergie, ist es vorgesehen, gemäß dem erfindungsgemäßen Verfahren hergestellten Brennstoff zur wenigstens teilweisen Energieversorgung bei der Verfahrensdurchführung zu verwenden. Hierfür können erfindungsgemäß hergestellte Brennstoffe verbrannt werden, um die beim Trocknen von Biomasse benötigte Wärmeenergie wenigstens teilweise bereitzustellen. Ferner ist es möglich, durch Verbrennung erfindungsgemäß hergestellter Brennstoffe elektrische Energie zu erzeugen und diese bei der Verfahrensdurchführung zu verwenden.

Bei der erfindungsgemäßen Verwendung ist es vorgesehen, Brennstoffe, die gemäß einem der oben beschriebenen Verfahren hergestellt sind, zur Erzeugung von Energie in Form von Wärme und /oder Strom durch Verbrennung in einer Feuerungsanlage, einem Ofen, einer Heizungsanlage und dergleichen zu verwenden. Insbesondere sieht es die vorliegende Erfindung vor, aus mittels eines technischen Verfahrens getrocknetem Gras hergestellten erfindungsgemäßen Brennstoff zu verwenden.

Die erfindungsgemäße Vorrichtung zur Herstellung von Brennstoffen aus gepresster Biomasse umfasst eine Einrichtung, mit der die Biomasse getrocknet wird, bevor sie in Form gepresst wird.

Die erfindungsgemäße Vorrichtung umfasst eine Einrichtung zum Zerkleinern der Biomasse und eine Einrichtung zum Pressen der Biomasse bevor sie der Trocknungseinrichtung zugeführt werden. Dabei ist es vorgesehen, dass die Zerkleinerungseinrichtung der Presseinrichtung vorgeschaltet ist oder dass eine Zerkleinerungseinrichtung sowohl vor als auch nach der Presseinrichtung verwendet wird.

Bei einer bevorzugten Ausführungsform der erfindungsgemäßen Vorrichtung umfasst die Trocknungseinrichtung eine Trockenkammer zur Aufnahme der zerkleinerten und gepressten, Biomasse, die mittels eines erwärmten Gases und/oder mittels einer Mikrowellenheizung so erwärmt wird, dass die Biomasse nach einer Beendigung des Trocknungsvorgangs einen gewünschten oder vorgegebenen Feuchtegehalt aufweist.

Um beispielweise zu verhindern, dass beim Trocknen entstehende Gase und/oder Fluide austreten können, ist es vorgesehen, die Trocknungseinrichtung während des Trockenvorgangs gas- und/oder fluiddicht zu verschließen. Auf diese Weise können gesammelte Gase und/oder Fluide abgesaugt, abgeführt und, falls erforderlich, entsorgt werden. Wenn beim Trocknen der Biomasse Gase entstehen, erlaubt es diese Ausführungsform der Trocknungseinrichtung, dabei entstehenden Gasdruck zu verwenden, um die Biomasse beim Trocknen, wie oben beschrieben, unter Druck zu setzen.

Mittels einer Einrichtung, um den beim Trocknen auf die Biomasse wirkenden Druck zu steuern, kann der Trocknungsvorgang verbessert werden, wenn beispielsweise nach einer vorgegebenen Zeitdauer die noch erwärmte Biomasse einem Druckabfall ausgesetzt wird.

Insbesondere wenn Biomasse in getrennter Form vorliegt und getrocknet wird, umfasst die erfindungsgemäße Vorrichtung vorzugsweise eine Einrichtung, um die unterschiedlichen Arten getrockneter Biomasse zu vermengen, bevor sie in Form gepresst werden. Alternativ hierzu ist es vorgesehen, dass die erfindungsgemäße Vorrichtung eine Einrichtung aufweist, um die Biomasse vor dem Trocknen, gegebenenfalls auch vor dem Zerkleinern und Pressen, zu vermengen. Letzteres hat den Vorteil, dass in getrennter Form bereitgestellte Arten Biomasse gemeinsam verarbeitet werden können.

Vorzugsweise umfasst die erfindungsgemäße Vorrichtung auch eine Einrichtung, um aus der getrockneten Biomasse in Form gepressten Brennstoff herzustellen. Eine solche Einrichtung kann baueinheitlich integriert oder separat ausgeführt bereitgestellt sein.

Um beispielsweise die erfindungsgemäße Vorrichtung selbst wenigstens teilweise mit Energie zu versorgen, kann diese eine Einrichtung zur Erzeugung von Energie durch Verbrennung mittels der Vorrichtung hergestellter Brennstoffe aufweisen. Die Energieerzeugungseinrichtung kann beispielsweise eine als der Trocknungseinrichtung thermische Energie bereitstellende Einrichtung (z.B. Ofen) und/oder ein der erfindungsgemäßen Vorrichtung elektrische Energie zuführende Einrichtung sein.

### Kurzbeschreibung der Figuren

Bei der Beschreibung bevorzugter Ausführungsformen der vorliegenden Erfindung wird auf die beigefügten Figuren Bezug genommen, von denen zeigen:
Fig. 1 eine schematische Darstellung einer bevorzugten Ausführungsform des erfindungsgemäßen Verfahrens zur Herstellung von Brennstoffen aus gepresster Biomasse, und
Fig. 2 eine schematische Darstellung einer bevorzugten Ausführungsform der erfindungsgemäßen Vorrichtung zur Herstellung von Brennstoffen aus gepresster Biomasse.

### Beschreibung bevorzugter Ausführungsformen

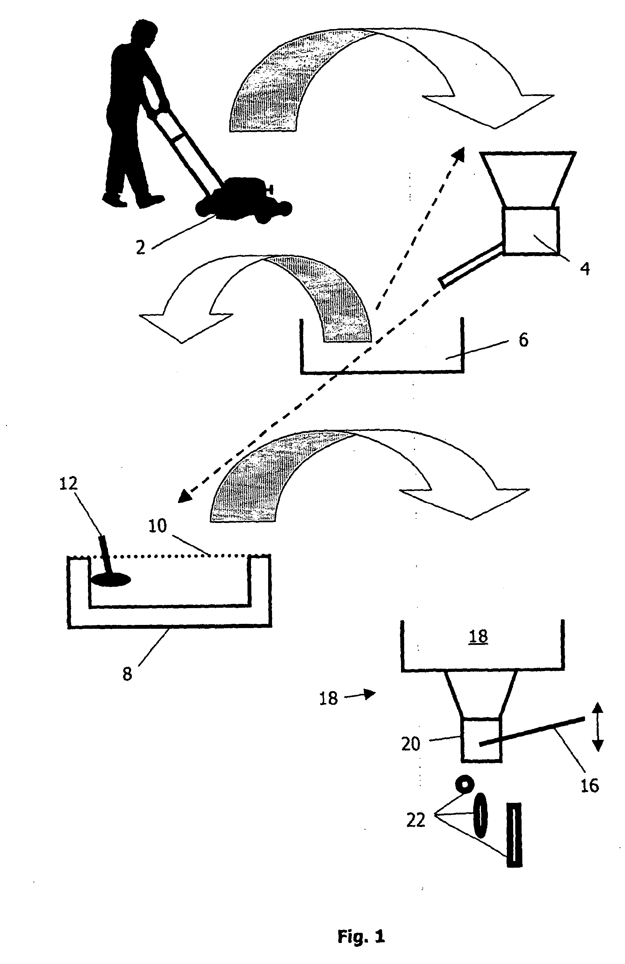

Bezugnehmend auf Fig. 1 wird eine Ausführungsform des Verfahrens zur Herstellung von Brennstoffen aus gepresster Biomasse am Beispiel von Biomasse in Form von Gras erläutert, aus dem Brennstoff in Form von Pellets hergestellt wird. Insbesondere erfolgt diese Erläuterung anhand von in Privathaushalten anfallenden Grasabfällen, die bei Verwendung eines Rasenmähers 2 anfallen.

Beim Rasenmähen angefallenes Gras wird normalerweise durch den Rasenmäher 2 so zerkleinert, dass es ohne weitere Zerkleinerung getrocknet und zu Pellets geformt, d.h. pelletiert werden kann. Wenn beispielsweise aufgrund des verwendeten Rasenmähertyps oder der Länge des zu mähenden Grases Gras anfällt, dessen Länge beim Trocknen oder beim Pelletieren Probleme verursachen kann, wird vor dem Trocknen des Grases eine Zerkleinerungsvorrichtung 4 verwendet. Beispiele für die Zerkleinerungsvorrichtung 4 umfassen Häcksler, Schredder und dergleichen.

Mittels der Zerkleinerungsvorrichtung 4 zerkleinertes Gras oder beim Mähen unmittelbar anfallendes Gras wird, gegebenenfalls und wie unten beschreiben nach Verwendung einer Pressvorrichtung 6, in eine Trocknungsvorrichtung 8 eingebracht.

In der Trocknungsvorrichtung 8 wird das Gras mittels thermischer Energie getrocknet. Die aus Isolationsgründen doppelwandig ausgeführte Trocknungsvorrichtung 8 kann, beispielsweise in der Doppelwand baueinheitlich integriert, eine Mikrowellenheizung und/oder elektrisch betriebene Heizwendeln aufweisen. Aus energetischer Sicht ist es allerdings vorteilhaft, die zum Trocknen verwendete thermische Energie unter Verwendung einer nicht dargestellten Fotovoltaikanlage zu erzeugen.

Eine einfache Weise, dem in der Trocknungsvorrichtung 8 aufgenommenen Gras thermische Energie zuzuführen, besteht darin, die Trocknungsvorrichtung 8 mit einer lichtdurchlässigen Abdeckung 10 zu versehen. Vergleichbar zu einem aus dem Bereich der Imkerei bekannten Sonnenwachsschmelze erzeugt durch die Abdeckung 10 einfallendes Sonnenlicht in der Trocknungsvorrichtung 8 Temperaturen, die ausreichen, um das dort aufgenommene Gras zu trocknen.

Beim Trocknen des Grases anfallender Wasserdampf, Wasserpartikel und Wasser können über in dieser Figur nicht dargestellte Gas- und Wasserablässe entfernt werden. Um festzustellen, ob das Gas in der Trocknungsvorrichtung 8 ausreichend lange getrocknet wurde, das heißt einen zum Pelletieren geeigneten Feuchtegehalt aufweist, kann eine als separate Komponente oder mit der Trocknungsvorrichtung 8 baueinheitlich integriert Feuchtigkeitserfassungsvorrichtung 12 verwendet werden. Unter Berücksichtigung der hier angenommenen Anwendung im Privathaushalt könnte diese Überprüfung auch manuell durchgeführt werden.

Um das Trocknen zu verkürzen und/oder den dabei erforderlichen Energieaufwand zu reduzieren, ist es möglich, das Gras vor dem Trocknen in einer Pressvorrichtung 6 zu pressen, um dadurch Feuchtigkeit und Wasser zu entfernen. Hierfür können z.B. Pressen verwendet werden, die bei Verarbeitung von Oliven, Weintrauben etc. eingesetzt werden. Aufgrund dieses Pressvorgangs kann das Gras verklumpen oder verkleben, was den Trocknungsvorgang erschweren kann. Um dies zu verhindern, kann das gepresste, "vorgetrocknete" Gras zum erneuten Zerkleinern in die Zerkleinerungseinrichtung 4 eingebracht werden, um eine Beschaffenheit zu erreichen, die den Trocknungsvorgang unterstützt. Dieser Vorgang ist in Fig. 1 durch die gestrichelten Pfeile von der Pressvorrichtung 6 zu der Zerkleinerungsvorrichtung 4 und von dieser zu der Trocknungsvorrichtung 8 angedeutet.

Nach dem Trocknen wird das Gras von der Trocknungsvorrichtung 8 in eine Pelletiervorrichtung 14 eingebracht, die hier als mittels eines Hebels 16 manuell Betätigbare dargestellt ist. Bei Betätigung des Hebels 16 wird eine vorgegebene Menge getrockneten Grases aus einem Vorratsbehälter 18 in die eigentliche Pelletiereinrichtung 20 der Pelletiervorrichtung 14 eingebracht und dort zu einem oder gleichzeitig zu mehreren Pellets geformt. Dieser Vorgang wiederholt sich, bis das gesamte getrocknete Gras aus dem Vorratsbehälter 18 pelletiert ist.

Die so hergestellten Pellets 22, die in Abhängigkeit der Ausführung der Pelletiereinrichtung 20, wie in Fig. 1 dargestellt, unterschiedliche Formen haben können, verlassen die Pelletiervorrichtung 14 und können zur Energieerzeugung verbrannt werden, um beispielsweise mittels Biomasseöfen zu heizen.

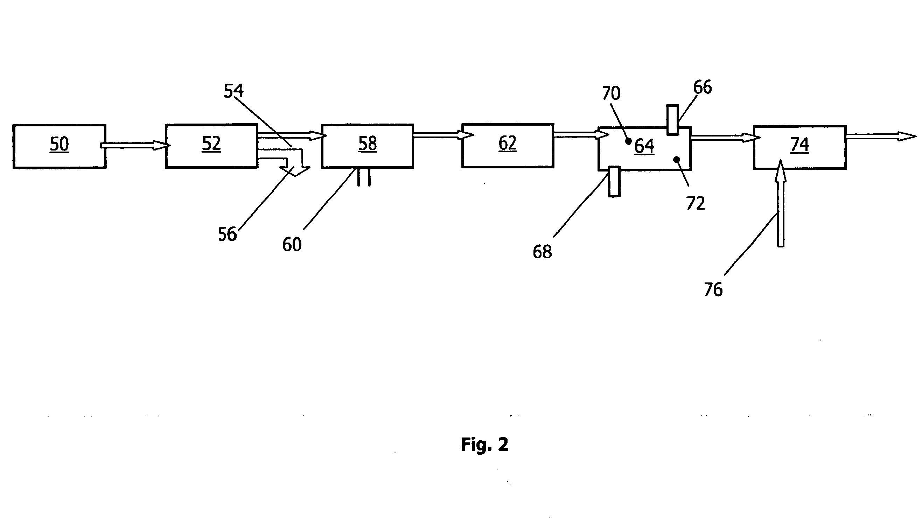

Bezugnehmend auf Fig. 2 wird eine Vorrichtung zur Herstellung von Brennstoffen aus gepresster Biomasse in Form brennbarer Pellets aus Gras sowie deren Betrieb beschrieben, die für eine Pelletherstellung im industriellen Maßstab geeignet ist.

Biomasse wird in einer Sammeleinrichtung 50, beispielsweise einem Container, gesammelt. Die in der Sammeleinrichtung 50 aufgenommenen Biomasse kann unterschiedlicher Art und/oder Herkunft sein und in vermengter Form vorliegen. Der Einfachheit halber wird im Folgenden angenommen, dass in der Sammeleinrichtung 50 eine Art Biomasse, nämlich Gras, aufgenommen ist, das, wie im Folgenden beschrieben, verarbeitet und vor dem Pelletieren mit einer anderen Art Biomasse einer anderen Art vermengt werden kann.

Das Gras wird von der Sammeleinrichtung 50 zu einer Zerkleinerungseinrichtung 52 befördert, die beispielsweise ein Schredder, Häcksler etc. sein kann. Um möglicherweise in dem Gras enthaltene Verunreinigungen, wie zum Beispiel Steine, Erdreich und dergleichen, zu entfernen, ist es vorgesehen, dass die Zerkleinerungseinrichtung 52 baueinheitlich integriert oder nachgeschaltet eine in dieser Figur nicht bezeichnete Einrichtung aufweist, um zerkleinertes Gras und Verunreinigung getrennt weiter zu befördern. Dies ist in Fig. 2 durch den die Beförderung zerkleinerten Grases angebenden Pfeil 54 und durch den die Entfernung von Verunreinigungen angebenden Pfeil 56 angedeutet.

Das zerkleinerte Gras wird von der Zerkleinerungseinrichtung 52 zu einer Presseinrichtung 58 befördert, um dem Gras durch Pressen Wasser zu entziehen. Dabei anfallendes Wasser oder andere Fluide werden über einen Ablass 60 entfernt.

Falls aufgrund des Pressvorgang in der Presseinrichtung 58 das Gras eine Beschaffenheit aufweist, die dessen Trocknung erschweren und insbesondere die Trockendauer verlängern und/oder einen höheren Energieaufwand beim Trocknen erfordern kann, wird das Gras nach Verlassen der Presseinrichtung 58 einer weiteren Zerkleinerungseinrichtung 62 zugeführt.

Das so vorgetrocknete Gras wird von der Einrichtung 60 zu einer Trocknungseinrichtung 64 befördert, wo es mittels eines oder mehreren erwärmten Gasen (z.B. Heißluft), mittels einer Mikrowellenheizung, mittels einer elektrischen Heizung und/oder dergleichen erwärmt wird. Beim Trocknen entstehende Dämpfe, insbesondere Wasserdampf, und anfallendes Wasser oder anfallende Feuchtigkeit können über einen Abgaskanal 66 bzw. eine Fluidablasskanal 68 entfernt werden. Mittels eines Temperatursensors 70 kann die Temperatur des zu trocknenden Grases und/oder der in der Trocknungseinrichtung 64 vorhandenen Umgebung gemessen werden, um beispielsweise eine unerwünschte Entzündung des Grases zu verhindern und den Trocknungsvorgang zu steuern. Um zu überprüfen, ob das in der Trocknungseinrichtung 64 zu trocknende Gras einen gewünschten oder geforderten Feuchtegehalt aufweist, wird eine Feuchtigkeitsmesseinrichtung 72 verwendet.

Beim Trocknen des Grases in der Trocknungseinrichtung 64 kann das Gras unter einem gegenüber dem Umgebungsdruck erhöhten Druck erwärmt werden. Wird gegen oder am Ende des Trocknungsvorgangs der Druck auf Umgebungsdruck reduziert, tritt aufgrund des Druckunterschieds zwischen dem erwärmten Gras und dessen Umgebung Wasser, falls noch vorhanden, aus dem Gras aus.

Nach Beendigung des Trocknungsvorgangs wird das getrocknete Gras von der Trocknungseinrichtung 64 in eine Pelletiereinrichtung 74 befördert und zu Pellets geformt.

Um nicht nur Gras umfassende Pellets herzustellen, ist es möglich, die Verarbeitung von Biomassen bis zum Abschluss des Trocknungsvorgangs beschrieben ist, für eine andere Art Biomasse separat durchzuführen. Dies kann nacheinander unter Verwendung der Einrichtungen 50, 52, 58, 62 und 64 oder im Wesentlichen zeitgleich, parallel in diesen entsprechenden zusätzlichen Einrichtungen durchgeführt werden. Der letztere Fall ist in Fig. 2 durch den mit 76 bezeichneten Pfeil angedeutet, der die Zufuhr einer anderen getrockneten, zerkleinerten und gepressten, Art Biomasse veranschaulicht. Diese wird mit dem von der Trocknungseinrichtung 64 erhaltenen Gras in einer nicht dargestellten Einrichtung vermengt und der Pelletiereinrichtung 74 zugeführt, um Pellets herzustellen, die auf unterschiedlichen Arten Biomasse basieren. Auf diese Weise ist es beispielsweise möglich, Pellets herzustellen, die Gras und Holz umfassen.

## Patentansprüche

1. Verfahren zur Herstellung von Brennstoff aus in Form gepresster Biomasse, bei dem die Biomasse vor dem Formpressvorgang und einem diesem vorgelagerten Trocknungsvorgang einem ersten Zerkleinerungsvorgang und diesem nachgelagerten Pressvorgang zur Reduktion des Feuchtegehalts unterworfen wird,
wobei
Biomasse unterschiedlicher Art, die in vermengter Form vorliegt, verarbeitet wird
oder
in getrennter Form vorliegende Biomasse unterschiedlicher Art getrennt getrocknet und erst zum Formpressen vermengt wird.

2. Verfahren nach Anspruch 1, bei dem die Biomasse einem dem Pressvorgang nachgelagerten (zweiten) Zerkleinerungsvorgang unterworfen wird.

3. Verfahren nach einem der vorigen Ansprüche, bei dem als Biomasse nur Garten- und Landschaftsbauprodukte und Garten- und Landschaftsbauabfälle verwendet werden.

4. Verfahren nach einem der vorigen Ansprüche, bei dem als Biomasse nur Pflanzenschnittgut und/oder Blätter und/oder Laub und/oder Gras und/oder Astwerk und/oder Holz verwendet werden.

5. Verfahren nach einem der vorherigen Ansprüche, bei dem die Biomasse mittels eines erwärmten Gases getrocknet wird.

6. Verfahren nach einem der vorherigen Ansprüche, bei dem die Biomasse mittels einer Mikrowellenheizung getrocknet wird.

7. Verfahren nach einem der vorherigen Ansprüche, bei dem die Biomasse zum Trocknen unter Druck erwärmt und danach im erwärmten Zustand Umgebungsdruck ausgesetzt wird.

8. Verfahren nach einem der vorherigen Ansprüche, bei dem beim Formpressen der Biomasse Granulat, Presslinge, Pellets oder Briketts hergestellt werden.

9. Verfahren nach einem der vorherigen Ansprüche, bei dem bei dessen Durchführung erforderliche Energie wenigstens teilweise durch Verbrennen gemäß dem Verfahren hergestellten Brennstoffs erzeugt wird.

10. Verwendung von gemäß dem Verfahren nach einem der vorherigen Ansprüche hergestelltem Brennstoff zur Erzeugung thermischer und/oder elektrischer Energie, durch Verbrennung.

11. Vorrichtung zur Herstellung von Brennstoff aus in Form gepresster Biomasse, mit einer Einrichtung zum Trocknen (8, 64) der Biomasse, einer der Trocknungseinrichtung (8, 64) nachgeschalteten Einrichtung (74) zum Formpressen der Biomasse und
einer der Trocknungseinrichtung (8, 64) vorgeschalteten Einrichtung (58) zum Pressen der Biomasse zur Reduktion des Feuchtegehalts und dieser vorgeschalteten ersten Einrichtung (4, 52) zum Zerkleinern der Biomasse

12. Vorrichtung nach Anspruch 11 mit einer der Presseinrichtung (58) nachgeschalteten und der Trocknungseinrichtung (8, 64) vorgeschalteten (zweiten) Einrichtung (62) zum Zerkleinern der Biomasse.

13. Vorrichtung nach einem der Ansprüche 11 oder 12, bei der
- die Trocknungseinrichtung (8, 64) eine mittels eines erwärmten Gases und/oder einer elektrischen Heizung und/oder mittels einer Mikrowellenheizung erwärmbare Trockenkammer umfasst, und/oder
- bei der die Trocknungseinrichtung (8, 64) zum Trocknen gas- und /oder fluiddicht verschließbar ist, und/oder
- bei der die Trocknungseinrichtung (8, 64) eine Einrichtung umfasst, um auf die Biomasse beim Trocknen wirkenden Druck zu steuern, und/oder
- mit einer Einrichtung zum Vermengen der Biomasse vor und/oder nach dem Trocknen, und/oder
- mit einer Einrichtung zur Erzeugung thermischer und/oder elektrischer Energie durch Verbrennung mittels der Vorrichtung hergestellten Brennstoffs, und/oder
- mit einer Einrichtung zur Erzeugung thermischer und/oder elektrischer Energie durch Verbrennung mittels der Vorrichtung hergestellten Brennstoffs, wobei die Energieerzeugungseinrichtung zur Energieversorgung beim Betrieb der Vorrichtung dient.

14. Verwendung der Vorrichtung nach einem der Ansprüche 11 oder 12 zur Herstellung von Brennstoff aus Garten- und Landschaftsbauprodukten sowie Garten- und Landschaftsbauabfällen.

15. Verwendung der Vorrichtung nach einem der Ansprüche 11 oder 12 zur Herstellung von Brennstoff aus Pflanzenschnittgut und/oder Blättern und/oder Laub und/oder Gras und/oder Astwerk und/oder Holz.

## Claims

1. Method for producing fuel from moulded biomass in which the biomass, before the compression moulding process and a drying process connected upstream thereof, is subjected to a first comminution process and a pressing process connected downstream thereof for reducing the moisture content, biomass of different types which is present in mixed form being processed
or
biomass of different types present in separate form being dried separately and not mixed until used for compression moulding.

2. Method according to Claim 1, in which the biomass is subjected to a (second) comminution process connected downstream of the pressing process.

3. Method according to one of the preceding claims, in which, as biomass, only horticultural and landscaping products and horticultural and landscaping wastes are used.

4. Method according to one of the preceding claims, in which, as biomass, only plant cutting material and/or leaves and/or foliage and/or grass and/or branches, and/or wood, are used.

5. Method according to one of the preceding claims, in which the biomass is dried by means of a warmed gas.

6. Method according to one of the preceding claims, in which the biomass is dried by means of a microwave heater.

7. Method according to one of the preceding claims, in which the biomass is warmed for drying under pressure and thereafter exposed to ambient pressure in the warmed state.

8. Method according to one of the preceding claims, in which, on compression moulding of the biomass, granules, mouldings, pellets or briquettes are produced.

9. Method according to one of the preceding claims, in which energy to carry it out is generated at least in part by burning fuel produced according to the method.

10. Use of fuel produced according to the method according to one of the preceding claims for generating thermal and/or electrical energy by combustion.

11. Device for producing fuel from compression moulded biomass, having a unit for drying (8, 64) the biomass, a unit (74) that is connected downstream of the drying unit (8, 64) and is for compression moulding the biomass, and a unit (58) that is connected upstream of the drying unit (8, 64) and is for pressing the biomass for reducing the moisture content and, upstream thereof, a first unit (4, 52) for comminuting the biomass.

12. Device according to Claim 11 having a (second) unit (62) for comminuting the biomass which is connected downstream of the pressing unit (58) and upstream of the drying unit (8, 64).

13. Device according to either of Claims 11 and 12, in which
- the drying unit (8, 64) comprises a drying chamber which is warmable by means of a warmed gas and/or an electrical heater and/or by means of a microwave heater, and/or
- in which the drying unit (8, 64) can be sealed gas-tightly and/or fluid-tightly for drying, and/or
- in which the drying unit (8, 64) comprises a unit for controlling the pressure acting on the biomass during drying, and/or
- having a unit for mixing the biomass before and/or after drying, and/or
- having a unit for generating thermal and/or electrical energy by combustion of fuel produced by means of the device, and/or
- having a unit for generating thermal and/or electrical energy by combustion of fuel produced by means of the device, wherein the energy production unit serves for energy supply during operation of the device.

14. Use of the device according to either of Claims 11 and 12 for producing fuel from horticultural and landscaping products and also horticultural and landscaping wastes.

15. Use of the device according to either of Claims 11 and 12 for producing fuel from plant cutting material and/or leaves and/or foliage and/or grass and/or branches and/or wood.

## Revendications

1. Procédé de préparation de combustible à partir de biomasse sous forme comprimée, dans lequel avant l'opération de compression et une opération de séchage qui la précède, la biomasse subit une première opération de déchiquetage suivie par une opération de compression en vue de réduire sa teneur en humidité,
dans lequel des biomasses de natures différentes sont traitées sous forme mélangée ou
dans lequel des biomasses de natures différentes présentes sous forme séparée sont séchées séparément avant d'être mélangées en vue de la compression.

2. Procédé selon la revendication 1, dans lequel la biomasse subit une (deuxième) opération de déchiquetage qui suit l'opération de compression.

3. Procédé selon l'une des revendications précédentes, dans lequel on utilise comme biomasse uniquement des produits de jardin et d'agriculture et des déchets de jardin et d'agriculture.

4. Procédé selon l'une des revendications précédentes, dans lequel on utilise comme biomasse uniquement des chutes végétales découpées et/ou des feuilles et/ou de la verdure et/ou de l'herbe et/ou des branchages et/ou du bois.

5. Procédé selon l'une des revendications précédentes, dans lequel la biomasse est séchée à l'aide d'un gaz chauffé.

6. Procédé selon l'une des revendications précédentes, dans lequel la biomasse est séchée au moyen d'un chauffage à microondes.

7. Procédé selon l'une des revendications précédentes, dans lequel la biomasse est chauffée sous pression pour être séchée et est ensuite exposée à la pression ambiante à l'état chauffé.

8. Procédé selon l'une des revendications précédentes, dans lequel on produit par compression de la biomasse des granulés, des comprimés, des pastilles ou des briquettes.

9. Procédé selon l'une des revendications précédentes, dont l'énergie nécessaire pour son exécution est produite au moins en partie par combustion du combustible produit par le procédés.

10. Utilisation de combustible préparé par le procédé selon l'une des revendications précédentes pour produire de l'énergie thermique et/ou de l'énergie électrique par combustion.

11. Dispositif de préparation de combustible à partir de biomasse sous forme comprimée, et présentant un dispositif (8, 64) de séchage de la biomasse, un dispositif (74) de compression de la biomasse disposé en aval du dispositif (8, 64) de séchage et un dispositif (58), prévu en amont du dispositif de séchage (8, 64) et précédé par un premier dispositif (4, 52) de déchiquetage de la biomasse, pour réduire sa teneur en eau.

12. Dispositif selon la revendication 11, présentant un (deuxième) dispositif (62) de déchiquetage de la biomasse disposé en aval du dispositif de compression (58) et en amont du dispositif de séchage (8, 64).

13. Dispositif selon l'une des revendications 11 ou 12, dans lequel
- le dispositif (8, 64) de séchage comprend une chambre de séchage qui peut être chauffée au moyen d'un gaz chauffé, d'un chauffage électrique et/ou d'un chauffage à microondes, et/ou
- dans lequel le dispositif de séchage (8, 64) peut être fermé de manière étanche aux gaz et/ou aux fluides en vue du séchage, et/ou
- dans lequel le dispositif de séchage (8, 64) comprend un dispositif qui contrôle une pression qui agit sur la biomasse lors du séchage, et/ou
- avec un dispositif qui mélange la biomasse avant et/ou après le séchage et/ou
- avec un dispositif qui produit de l'énergie thermique et/ou de l'énergie électrique par combustion au moyen du combustible produit par le dispositif et/ou
- avec un dispositif qui produit de l'énergie thermique et/ou de l'énergie électrique par combustion du combustible préparé au moyen du dispositif, le dispositif de production d'énergie servant à alimenter le dispositif en énergie lors de son fonctionnement.

14. Utilisation du dispositif selon l'une des revendications 11 ou 12 pour préparer du combustible à partir de produits de jardin et d'agriculture ainsi que de déchets de jardin et d'agriculture.

15. Utilisation du dispositif selon l'une des revendications 11 ou 12 pour produire du combustible à partir de chutes végétales découpées et/ou de feuilles et/ou de verdure et/ou d'herbe et/ou de branchages et/ou de bois.
